Europäisches Patentamt

European Patent Office

Office européen des brevets

(11) Publication number: **0 342 025 B1**

(12) **EUROPEAN PATENT SPECIFICATION**

(45) Date of publication of patent specification: **18.01.95**  (51) Int. Cl.⁶: **C08K 9/06**, C09C 1/30, C08L 83/04

(21) Application number: **89304766.2**

(22) Date of filing: **10.05.89**

(30) Priority: **13.05.88 US 193626**

(43) Date of publication of application:
**15.11.89 Bulletin 89/46**

(45) Publication of the grant of the patent:
**18.01.95 Bulletin 95/03**

(84) Designated Contracting States:
**BE DE ES FR GB IT NL**

(56) References cited:
**EP-A- 0 251 176**
**GB-A- 1 420 345**

(73) Proprietor: **DOW CORNING CORPORATION**
**3901 S. Saginaw Road**
**Midland**
**Michigan 48686-0994 (US)**

(72) Inventor: **Collins, Warde Thomas**
**806 Smith Road**
**Midland**
**Michigan (US)**
Inventor: **Cottrell, Kenneth Ray**
**1919 Laurell Lane**
**Midland**
**Michigan (US)**
Inventor: **Saam, John Carlton**
**2320 Cranbrook**
**Midland**
**Michigan (US)**

(74) Representative: **Lewin, John Harvey et al**
**Elkington and Fife**
**Prospect House**
**8 Pembroke Road**
**Sevenoaks, Kent TN13 1XR (GB)**

(54) Improved method of producing treated silica filler for silicone rubber.

**Description**

This invention relates to a method of producing treated silica filler for silicone rubber and to the filler so produced.

A rapid and economical method of producing treated, reinforcing silica, for use in silicone rubber, consists essentially of admixing the filler with a volatile treating agent of the formula $RSi(OR')_3$ or $R_2Si(OR')_2$ in the presence of catalytic amounts of volatile acid or base promoters, the base promoters consisting of silylamines or silazanes or combinations of acid and base promoters.

EP-A- 0 251 176 discloses a method for modifying the surface of finely divided silica using, for example, dimethyldimethoxysilane and hexamethyldisilazane.

It is an object of this invention to produce treated, reinforcing silica, at moderate temperature in the absence of solvent, without long contact times and without the necessity of preheating or drying the silica.

It is an object of this invention to produce treated, reinforcing silica which requires a minimum of energy in order to disperse it rapidly into polydiorganosiloxane gum.

It is an object of this invention to produce a reinforcing silica having a modified surface so that crepeing is diminished when the treated filler is dispersed in a silicone polymer, yet providing improved handling properties prior to cure and improved mechanical properties after cure and after heat aging.

This invention provides a method of rapidly treating the surface of reinforcing silica filler consisting essentially of mixing, at a temperature of from about - 10 to 130°C.,

(A) 100 parts by weight of reinforcing silica filler, having a surface area of greater than 50 $m^2/g$ and having from 0.5 to 6 parts by weight of absorbed moisture,

(B) from 3 to 30 parts by weight of volatile treating agent of the formula $R_xSi(OR')_{4-x}$, wherein R is a substituted or unsubstituted alkyl, alkenyl, or aryl radical having from 1 to 6 carbon atoms, R' is an alkyl radical having from 1 to 3 carbon atoms, x is 1 or 2 and R and R' are chosen so that the vapor pressure of the alkoxysilane exceeds 506 Pa (0.005 atmosphere) at treatment temperature,

(C) from 0.001 to 5.0 parts by weight of volatile catalyst comprising an acid A and a base B, wherein acid A is a volatile acid or acid progenitor and base B is a silylamine or silazane, acid A and base B being chosen so that the vapor pressure of acid A and of base B exceeds 506 Pa (0.005 atmosphere) at treatment temperature, for a period of time sufficient to allow the desired amount of treating agent to be adsorbed onto the surface of the particulate filler.

Silicone elastomers consist essentially of polydiorganosiloxane reinforced with filler. The polydiorganosiloxane ordinarily contains a small amount of hydroxyl radical left from the method of manufacture. The polydiorganosiloxane is transformed from a fluid or gum into an elastomer by cross linking, either through the addition of a cross linking agent or through the formation of cross links between the radicals present on the polymer chain, both in the presence of a catalyst. The elastomer formed is very weak mechanically when compared to the common organic elastomeric materials. The silicone elastomers are commonly improved by the addition of reinforcing and extending fillers to modify their physical properties. A well known method of improving the physical strength of silicone elastomers is through the addition of reinforcing silica fillers. In order to act as reinforcing agents, the particles of filler need to be very small, the most common method of designating the particle size is by stating the surface area of the particles, stated as square meters of surface per gram of filler. The useful lower limit of reinforcing filler for polydiorganosiloxane is commonly agreed to be about 50 $m^2/g$. The most common filler for silicone elastomer is silica, both fumed silica and precipitated silica, with fumed silica preferred as it normally has a lower moisture content.

When these finely divided reinforcing fillers are mixed into polydiorganosiloxane, there is a reaction between the two which results in a thickening of the mixture. In the case of polymers of gum viscosity, the thickening can result in a mixture which is difficult to further process. This process, known as crepeing, has been prevented to a lesser or greater degree through the use of process aids added at the time of the addition of the filler to the polymer. The filler has also been treated before use, usually with a silane, in an attempt to prevent the crepeing reaction. The method of this invention results in a treated filler which is very easy to mix into the polymer and yields a mixture which has a reduced tendency to crepe.

The reinforcing silica filler (A) used in the method of this invention is a well known, commercial material. The method of producing the filler is not critical, both precipitated and fumed fillers are suitable. The preferred filler is fumed silica, since it is readily available in commercial quantities.

These finely divided fillers absorb water on their surface if they are exposed to the air. For example, a fumed silica stored at room conditions of 23°C. and 50% relative humidity, having a surface area of about 250 $m^2/g$, will contain about 2 percent of moisture on its surface. The method of this invention does not require that the surface of the filler be without moisture or that the amount of moisture be at an exact level,

2

as long as some moisture is present to hydrolyze the treating agent. A practical lower limit is about 0.5 percent by weight, while a practical upper limit is about 6 percent by weight. When more than about 6 percent moisture is present, at least in the case of fumed silica, the filler tends to form clumps and is more difficult to disperse.

The volatile treating agent used in the method of this invention is of the formula $R_xSi(OR')_{4-x}$, wherein R is a substituted or unsubstituted, saturated or unsaturated, alkyl or aryl radical having from 1 to 6 carbon atoms, R' is an alkyl radical having from 1 to 3 carbon atoms, x is 1 or 2 and R and R' are chosen so that the vapor pressure of the alkoxysilane exceeds 0.005 atmosphere at treatment temperature. R represents radicals such as methyl (Me), ethyl (Et), propyl, hexyl, vinyl, phenyl and 3,3,3-trifluoropropyl. R' represents methyl, ethyl and propyl radicals. Preferred treating agents are $MeSi(OMe)_3$ (methyltrimethoxysilane) and $Me_2Si(OMe)_2$ (dimethyldimethoxysilane). Mixtures of treating agents can also be used. The preferred treating agents can be used at room temperature since their vapor pressures are 0.035 and 0.064 atmosphere at 20°C. respectively for $MeSi(OMe)_3$ (methyltrimethoxysilane) and $Me_2Si(OMe)_2$ - (dimethyldimethoxysilane).

The amount of treating agent used can vary from 3 to 30 parts by weight, based upon 100 parts by weight of the filler. For fumed silica as the filler, a preferred amount is from 5 to 20 parts by weight. The optimum amount of treating agent used is determined as follows. The selected filler is treated with a range of amounts of treating agent, as well as a range of catalyst amounts. The treated filler samples are then used to prepare samples of the desired final product and the properties of the final product are evaluated. A comparison of the resulting properties indicates the optimum level of treating agent and catalyst to use in that particular instance. The examples of this application show such procedures. Filler treated according to this invention shows lower power requirements for mixing filler into high viscosity polymer, lower mill softening times, a less tacky compound, lower Williams Plasticity Number and Recovery and improved properties of a cured silicone rubber when the filler is used in a curable composition. In the case of high consistency silicone rubber stocks, an additional benefit is seen in the fact that a given durometer cured rubber can be produced with significantly lower fumed silica content, resulting in a more economical product than can be produced when using untreated filler.

The treatment of the reinforcing silica filler surface is catalyzed by from 0.001 to 5.0 parts by weight of a volatile catalyst, based upon 100 parts by weight of reinforcing silica filler. A preferred amount is from 0.001 to 2 parts. The volatile catalyst is a mixture of acid A and base B; wherein acid A is a volatile acid or acid progenitor and base B is a silylamine or silazane, acid A and base B being chosen so that the vapor pressure of acid A and of base B exceeds 506 Pa (0.005 atmosphere) at treatment temperature. A volatile acid or base is defined as that having the required vapor pressure. The acid A can be any acid or acid progenitor having the required volatility, preferred are acids selected from the group consisting of hydrogen chloride (HCl), hydrogen bromide (HBr), methyltrichlorosilane ($MeSiCl_3$) and dimethyldichlorosilane ($Me_2SiCl_2$). An acid progenitor is defined as a material that gives an acid when it contacts water or water vapor. Most preferred are methyltrichlorosilane and dimethyldichlorosilane. The base B can be a silylamine or silazane selected from the group consisting of $(R''_3Si)_2NR$, $(R''_3Si)_2NH$, $R''_3SiNR''_2$ and $R''_3SiNHR''$, where R'' is the same as R' and is an alkyl radical having from 1 to 3 carbon atoms. Most preferred is hexamethyldisilazane ($Me_3Si)_2NH$. The most preferred catalysts can be used at room temperature because their vapor pressures at 20°C. are 0.18 atmosphere for methyltrichlorosilane, 0.15 atmosphere for dimethyldichlorosilane, 0.25 atmosphere for trimethylchlorosilane and 0.026 atmosphere for hexamethyldisilazane.

The acid (A) and base (B) are well known materials as to the means of manufacture. The base (B) silazanes can also be produced by an in situ process where, for example, a chlorosilane, such as dimethyldichlorosilane, and an amine, such as ammonia, are added to the filler and allowed to react to give a silazane.

The method of this invention makes use of a gaseous treatment of the particulate filler. The treating agent and the catalyst are both of sufficient volatility at the treatment temperature to create an atmosphere in the treating chamber which contains sufficient treating agent and catalyst to treat the filler surface. The preferred method of treatment stirs the filler in a container whose contents can be agitated and purged with an inert gas. The effect can be obtained by circulating a gas through the bed at a sufficient rate to fluidize the filler or through rapid stirring or tumbling. The treating agent and catalyst are added to the container so that they are vaporized and deposited upon the filler surface. The temperature at which the treatment takes place is determined by the treating agent and catalyst used. When methyltrimethoxysilane and/or dimethyldimethoxysilane are used as treating agent with methyltrichlorosilane and/or dimethyldichlorosilane and hexamethyldisilazane used as catalyst, the treatment occurs very successfully at room temperature, defined herein as 10°C. to 30°C., in a period of time from about 3 to 10 minutes. If a higher boiling treating agent, such as diphenyldimethoxysilane, is used, the treatment temperature must be raised so that the concentration of treating agent in the fluidized bed is sufficient to adequately treat the filler. An upper temperature of 130 °C. is sufficient when using the treating agents and catalyst specified in this invention.

The treating agent and catalyst can be added to the mixing chamber in any order, but the preferred order is first adding the filler and fluidizing it, then adding the catalyst to give an activated filler surface, then adding the treating agent.

It is not necessary to further process the treated filler after the method of this invention to remove excess reactants, because only an amount of the catalyst and treating agent are added to the mixture at the time of the treatment process to give the desired properties. The small amounts of treating agent and catalyst used and the short time of treatment gives a treated filler with a minimum cost.

The usefulness and uniqueness of the filler resulting from the method of this invention can be shown by adding it to polydiorganosiloxane and comparing the product resulting (herein referred to as a base) with a similar product produced with untreated filler or filler not treated in accordance with this invention. The simplest comparison is done by mixing 30 parts by weight of filler into a polydimethylsiloxane having a viscosity of about 25,000 Pa•s (Williams Plasticity Number of about 150) and measuring the Williams Plasticity Number initially and over a period of time. A description of this plasticity test is found in ASTM D-926. Briefly, a piece of base weighing approximately 2 times the specific gravity is rolled into a ball and allowed to sit for 1 hour. It is then placed between two parallel plates in a Plastometer which applies a load to the sample, causing it to flow. After 3 minutes time, the thickness of the sample is measured and the load removed. After 1 minute, the thickness of the sample is remeasured. The Williams Plasticity Number is the thickness of the sample after the 3 minute load period in millimeters times 100. The Recovery is the final Williams Plasticity Number minus the original Williams Plasticity Number. The Williams Plasticity Number is a measure of how stiff the material is; the higher the number, the stiffer the mixture. If the measurement is made at various times over a period of time after the original mixing of the gum and filler, it gives an indication of how the filler and gum are interacting to produce a crepe. The recovery gives an indication of how resilient the mixture is. A low number means the material is more like a fluid, while a higher number means the material is becoming like an elastomer.

Another common method of evaluating the usefulness of a filler treatment is measuring the softening time of the mixture on a two roll mill. A given amount of material is placed upon a two roll mill and the time necessary for the material to soften to the point where it wraps around the faster roll is measured. When the roll speed, nip opening and sample size are similar, it gives a useful comparison between bases. The faster the base softens, the less a crepe has formed. Again, running this test repeatedly over a period of time can be used to indicate how much a base crepes and how fast the reaction is occurring.

A more revealing method of evaluating the effects of filler treatment can be performed by using a Haake Rheochord™ system. This is essentially a laboratory size sigma blade mixer that is instrumented so that the torque required to turn the mixer blade is measured and recorded. A graph of the torque versus time can be generated. By using a standardized procedure, comparisons between fillers as to their effect upon the base can be measured. The graph shows how much energy is required to mix the filler into the polymer and how much thickening of the base takes place during the mixing operation. The higher the final torque, the higher the viscosity of the base that has been produced. The easier and quicker the filler disperses in the polymer, the less energy is required for this manufacturing step and the lower the cost of production.

The usefulness of the treated filler produced by the method of this invention and comparisons to other treated and untreated fillers is best demonstrated by a series of examples. The following examples are used to show the uniqueness of the treated filler of this invention. The discussion of the comparisons is found in the discussion of the examples and the results obtained.

Examples 1, 2, 6 and 7 are not within the scope of the invention and are included for reference.

Example 1 (Reference)

This example illustrates the effectiveness of the type of alkoxysilane used to treat fume silica.

First 125 g of fumed silica with a surface area of 255 $m^2$/g and a moisture content of 2.2 percent (established by measuring weight loss on heating for 1 hour at 105 °C.) was placed in a one gallon stainless steel Waring Blender and agitated at a slow speed through the use of a Variac in the line to slow the motor. The stirrer was operated at a speed just sufficient to fluidize the silica in the blender. The blender has a cover which allows an inert gas purge of the space over the filler. Since the treating agents are flammable, it is necessary to maintain an atmosphere in the blender which is low in oxygen. Nitrogen was passed through the blender and exhausted into a bubbler so that the rate could be observed and adjusted. This is followed by the addition of 2.5 g hexamethyldisilazane and mixing for 3 minutes. Then 12.5 g of Si(OEt)$_4$ was added and mixed for 3 additional minutes, at which time the mixer was turned off. Similiar samples were prepared using the same amount of MeSi(OMe)$_3$, Me$_2$Si(OMe)$_2$ or Me$_3$SiOMe in place of the Si(OEt)$_4$.

The treated filler was evaluated as a reinforcing filler by compounding 30 parts of treated filler into 100 parts of polydiorganosiloxane gum. The gum contained about 0.14 mol percent vinyl radicals and the rest methyl radicals with dimethylvinylsiloxy endblockers. It had a William's Plasticity Number of 152. The compounding was done in a Haake Rheochord System 40 sigma blade mixer at a blade speed of 35 rpm. The filler was added in 8 equal increments, each being added every two minutes. A curve of the torque required by the mixer versus time was recorded to show the power required to mix the treated filler into the gum.

The softening time of each base was measured by recording the time in seconds for the base to transfer from the slow roll to the fast roll on an 8 inch two roll mill. This test is an indication of polymer/filler interaction and is a qualitative measure of how well the filler is treated. The comparative results are shown in Table I.

The Williams Plasticity of each compound was measured when compounded and over time in accordance with ASTM D926, with the results shown in Table I. The torque curves and plasticity data indicate that these fillers could be used in compounding without using the plasticizers commonly added during compounding of silicone rubber in order to prevent creping of the base during storage.

Each base was evaluated as a silicone rubber stock by mixing 100 parts of each compound with 0.7 parts of 2,5-bis(tert-butylperoxy)-2,5-dimethylhexane peroxide (Lupersol 101). The catalyzed stock was pressed into a sheet and vulcanized for 10 minutes at 171°C. followed by an oven cure of 4 hours at 200°C. Each base was also evaluated as a silicone rubber stock by mixing 100 parts of each compound with 1.3 parts of a paste containing 50 percent of 2,4-dichlorobenzoyl peroxide (Cadox TS-50). The catalyzed stock was pressed into a sheet and vulcanized for 5 minutes at 116°C. followed by an oven cure of 4 hours at 200°C. The cured silicone elastomers were evaluated for physical properties by measuring in accordance with ASTM procedures. The results are shown in Table I.

The treated silica was evaluated as a reinforcing filler in the manner described above. A comparison of the results in Table I shows Me$_2$Si(OMe)$_2$ to be the most efficient treating agent, followed by MeSi(OMe)$_3$, then Me$_3$SiOMe, with Si(OEt)$_4$ being the least effective. A higher level of filler treatment corresponds with the base having a lower final Haake torque, shorter mill softening time and lower plasticity and recovery. It also can be seen in a lower Shore A durometer, a higher elongation and lower modulus.

EP 0 342 025 B1

## Table I

| Treating Agent: | Me$_2$Si(OMe)$_2$ | MeSi(OMe)$_3$ | Me$_3$SiOMe | Si(OEt)$_4$ |
|---|---|---|---|---|
| **Property:** | | | | |
| Haake Final Torque, mg | 2372 | 3035 | 3318 | Crumbled |
| Mill Softening Time, seconds | 31 | 62 | 137 | 274 |
| Williams Plasticity Number | | | | |
|   Initial | 213 | 345 | 429 | 607 |
|   After 1 week | 269 | 422 | 493 | 676 |
|   After 1 month | 289 | 447 | 554 | 759 |
| **Williams Plasticity, Recovery** | | | | |
|   Initial | 15 | 18 | 28 | 43 |
|   After 1 week | 30 | 51 | 94 | 191 |
|   After 1 month | 66 | 112 | 168 | 237 |
| **Property after Cure** | | | | |
|   Durometer, Shore A | 42 | 52 | 54 | 58 |
|   Tensile Strength, MPa | 8.78 | 8.28 | 7.39 | 7.18 |
|   Elongation, percent | 447 | 370 | 348 | 333 |
|   200% Modulus, MPa | 2.42 | 3.2 | 3.1 | 3.38 |
| **Compression Set, percent** | | | | |
|   0.7 pph Lupersol 101 | 30.2 | 44 | 36.1 | 46.3 |
|   1.3 pph Cadox TS-50 | 62.6 | 77.5 | 46.9 | 70.5 |
| **Property after Heat Age, 70 hr/225°C.** | | | | |
|   Durometer, Shore A | 39 | 51 | 50 | 55 |
|   Durometer Change | -3 | -1 | -4 | -3 |
|   Tensile Strength, MPa | 4.66 | 5.82 | 5.08 | 5.66 |
|   Tensile % Change | -46.9 | -30 | -31 | -21 |
|   Elongation, percent | 266 | 293 | 269 | 326 |
|   Elongation % change | -40.49 | -21 | -23 | -2 |

Example 2 (Reference)

This example shows small amounts of hexamethyldisilazane catalyze the treatment of fumed silica with methyltrimethoxysilane. It also shows the same level of silazane alone is ineffective in sufficiently treating the silica so that it can be used as a reinforcing filler.

6

A series of treated fumed silicas were prepared by fluidizing 125 g of fume silica of Example 1, then adding the amount of hexamethyldisilazane shown in Table II and mixing for 3 minutes. Then the amount of methyltrimethoxysilane shown in Table II was added and mixing continued for 3 minutes, at which time the mixer was turned off. The first 4 runs show the effect of increasing amounts of hexamethyldisilazane catalyst. Run 5 is a comparative example using only hexamethyldisilazane. Runs 6 through 9 are the same ratio of catalyst to treating agent, increasing the amounts used.

Each of the treated silicas from the above runs were evaluated as a reinforcing filler by compounding the treated filler at a loading of 30 parts per 100 parts of the gum described in Example 1. The evaluation was done in the manner as described in the same example.

A comparison of the torque data from bases compounded from runs 1-5 is included along with the mill softening time, Williams Plasticity and cured elastomer properties in Table II. Comparison of the torque data shows hexamethyldisilazane used by itself at 5 g per 125 g fume silica did not treat the filler sufficiently to be useful as a reinforcing filler, as the base crumbled in the mixer during compounding. A comparison of runs 1-4 with the comparative run using only methyltrimethoxysilane shows hexamethyldisilazane catalyzes the filler treatment as can be seen by the lower torque. There was a decrease in the torque (less energy used) which corresponds with an increase in the level of hexamethyldisilazane. A similar trend is seen in the comparison of bases compounded with the treated filler from runs 6-9. In this case the amount of hexamethyldisilazane and methyltrimethoxysilane was increased, but the ratio of catalyst to treating agent was kept constant. The same trend in the shorter mill softening times and lower plasticity and recovery can be seen. The recovery is the amount the sample recovers after it has been under stress in the Williams Plastometer for the 3 minute test time and allowed to set without stress for one minute. A lower durometer with a higher elongation and lower modulus also corresponds with a higher level of catalyst or both catalyst and treating agent, as is the case for runs 6-9. This data indicates the treatment improves with an increase in catalyst or catalyst and treating agent.

Table II

| Run Number | 1 | 2 | 3 | 4* | 5* |
|---|---|---|---|---|---|
| Hexamethyldisilazane, g/100g silica | 4 | 2.6 | 1.2 | 0 | 4 |
| Methyltrimethoxysilane, g/100g silica | 20 | 20 | 20 | 20 | 0 |
| Property: | | | | | |
| Haake Final Torque,mg | 2064 | 2218 | 2285 | 2474 | Crumbled |
| Mill Softening Time,seconds | 0 | 0 | 0 | 15 | >180 |
| Williams Plasticity Number | | | | | |
| Initial | 175 | 165 | 201 | 282 | 505 |
| After 1 week | 203 | 208 | 236 | 325 | 538 |
| After 1 month | 236 | 221 | 254 | 338 | 574 |
| Williams Plasticity, Recovery | | | | | |
| Initial | 10 | 3 | 10 | 10 | 36 |
| After 1 week | 10 | 13 | 15 | 36 | 127 |
| After 1 month | 36 | 33 | 46 | 71 | 254 |
| Property after cure | | | | | |
| Durometer,Shore A | 42 | 43 | 47 | 51 | 53 |
| Tensile Strength, MPa | 6.5 | 6.8 | 7.3 | 4.8 | 5.7 |
| Elongation,percent | 379 | 389 | 369 | 276 | 258 |
| 200 % Modulus, MPa | 2.2 | 2.3 | 2.7 | 3 | 3.8 |

\* comparative example

Table II Cont.

| Run Number | 6 | 7 | 8 | 9 |
|---|---|---|---|---|
| Hexamethyldisilazane, g/100g silica | 1 | 2 | 3 | 4 |
| Methyltrimethoxysilane, g/100g silica | 5 | 10 | 15 | 20 |
| **Property:** | | | | |
| Haake Final Torque,mg | Crumbled | 2791 | 2208 | 2285 |
| Mill Softening Time,seconds | >180 | 35 | 0 | 0 |
| **Williams Plasticity Number** | | | | |
| Initial | 635 | 302 | 190 | 165 |
| After 1 week | 624 | 356 | 239 | 196 |
| After 1 month | 645 | 378 | 259 | 216 |
| **Williams Plasticity, Recovery** | | | | |
| Initial | 48 | 15 | 8 | 8 |
| After 1 week | 84 | 41 | 18 | 8 |
| After 1 month | 104 | 51 | 23 | 10 |
| **Property after cure** | | | | |
| Durometer,Shore A | 58 | 48 | 44 | 42 |
| Tensile Strength, MPa | 5.6 | 6 | 5.7 | 6.1 |
| Elongation,percent | 261 | 303 | 349 | 396 |
| 200 % Modulus, MPa | 3.9 | 3.1 | 2.3 | 2.1 |
| **Property after Heat Age, 70 hr/225°C.** | | | | |
| Durometer, Shore A | 53 | 47 | 48 | 44 |
| Durometer Change | -6 | -1 | 4 | 2 |
| Tensile Strength, MPa | 4.2 | 4.1 | 4.2 | 4.1 |
| Tensile % Change | -25.2 | -31.7 | -25.8 | -32 |
| Elongation, percent | 268 | 252 | 201 | 212 |
| Elongation % Change | 2.7 | -17.1 | -42.4 | -47 |

Comparative Example

This example illustrates the prior art use of ammonia as a catalyst to promote filler treatment with methyltrimethoxysilane.

First 125 g of fumed silica with a surface area of 255 $m^2/g$ and a moisture content of 2,2 percent (established by measuring weight loss on heating for 1 hour at 105°C.) was placed in a one gallon stainless steel Waring Blender and agitated at a slow speed through the use of a Variac in the line to slow the motor. The stirrer was operated at a speed just sufficient to fluidize the silica in the blender. Then 0.2 g of NH3

9

was added from a lecture bottle through a calibrated flow meter. The NH3 was allowed to mix with the silica for 3 minutes, then 25 g of methyltrimethoxysilane was injected into the fluidized silica. The fluidization was continued for 3 minutes, then the blender was turned off.

A second run was prepared using the same method, but the amount of ammonia was doubled. The comparative compostions were evaluated as in Example 1. The results show that these materials catalyzed with ammonia have inferior heat aging results when compared to the results shown in the previous and subsequent examples under this invention, particularly in the percent of tensile strength and percent of elongation lost when the elastomers are aged for 70 hours at 225°C.

Table III

| Property: | | |
|---|---|---|
| NH₃, g per 100 g silica | 0.16 | 0.32 |
| Methyltrimethoxysilane, g | 20 | 20 |
| Haake Final Torque, mg | 2335 | 2245 |
| Mill Softening Time, seconds | 7 | 5 |
| Williams Plasticity Number | | |
| Initial | 87 | 79 |
| After 1 week | 98 | 91 |
| After 1 month | 105 | 99 |
| Williams Plasticity, Recovery | | |
| Initial | 2 | 3 |
| After 1 week | 5 | 4 |
| After 1 month | 8 | 7 |
| Property after Cure | | |
| Durometer, Shore A | 49 | 45 |
| Tensile Strength, mPa | 6.9 | 6.5 |
| Elongation, percent | 374 | 373 |
| 200 % Modulus, mPa | 2.6 | 2.4 |
| Property after Heat Age, 70 hr/225°C. | | |
| Durometer, Shore A | 53 | 49 |
| Durometer Change | 4 | 4 |
| Tensile Strength, mPa | 3.78 | 3.2 |
| Tensile % Change | -45.2 | -51.1 |
| Elongation, percent | 155 | 138 |
| Elongation % change | -58.6 | -63 |

Example 4

This example illustrates the use of small amounts of methyltrichlorosilane and hexamethyldisilazane together as catalysts to promote the treatment of fume silica with methyltrimethoxysilane. This is a preferred method of treating fume silica. A preferred method of treating fume silica is the use of dimethyldimethoxysilane as the treating agent and small amounts of methyltrichlorosilane and hexamethyldisilazane as the catalysts.

First, 125 g of fumed silica of Example 1 was fluidized in a Waring Blender as described in that example. Then 0.31 g of hexamethydisilazane was injected and mixed 3 minutes. Immediately following this, 12.5 g of methyl trimethoxysilane containing 0.25 g methyltrichlorosilane per 99.75 g methyltrimethoxysilane was added and mixed 3 additional minutes. The blender was then turned off. This is shown as run 2. The procedure was repeated in a second and third run with the level of methyltrimethoxysilane being 18.5 and 25 g, shown as run 4 and run 6.

The treated filler was evaluated as a reinforcing filler in the same manner described in Example 1. A comparison of these three runs is shown in Table V along with three comparative runs (1,3,5) which were not catalyzed with hexamethyldisilazane. This comparison shows the addition of 0.25 g of hexamethyldisilazane enhances the filler treatment for the same reasons stated in Example 3. In addition to the improvement in the overall properties discussed in all prior examples, we see an added benefit in the use of this filler treatment for a reinforcing filler to be used in an elastomer in a hot air vulcanization process where the compression set may be important. A comparison of the compression set data of the elastomers catalyzed with 2,4 dichlorobenzoyl peroxide (a hot air vulcanizing peroxide) and compounded using treated filler from runs 2, 4 and 6 and the comparative runs where hexamethyldisilazane was not used is shown in Table V. This data shows a significant difference between the three runs containing hexamethyldisilazane and the three runs not containing hexamethyldisilazane. The difference is seen as an improvement in the compression set where the filler from runs 2, 4 and 6 was used while the compression set gets worse with increasing amounts of treating agent containing chlorosilane in the absence of hexamethyldisilazane.

Table V

| Run Number | 1* | 2 | 3* | 4 | 5* | 6 |
|---|---|---|---|---|---|---|
| Treating Agent, g/100g Silica | 10 | 10 | 15 | 15 | 20 | 20 |
| $(Me_3Si)_2NH$, g/100g Silica | 0 | 0.25 | 0 | 0.25 | 0 | 0.25 |
| **Property:** | | | | | | |
| Haake Final Torque, mg | 3697 | 3325 | 2883 | 2923 | 2260 | 2451 |
| Mill Softening Time, seconds | 155 | 121 | 67 | 45 | 5 | 22 |
| Williams Plasticity Number | | | | | | |
| Initial | 587 | 516 | 455 | 381 | 290 | 269 |
| After 1 week | 691 | 569 | 521 | 455 | 356 | 320 |
| After 1 month | 706 | 577 | 551 | 465 | 396 | 363 |
| Williams Plasticity, Recovery | | | | | | |
| Initial | 38 | 30 | 28 | 23 | 18 | 20 |
| After 1 week | 104 | 61 | 48 | 46 | 25 | 25 |
| After 1 month | 135 | 81 | 84 | 43 | 28 | 36 |
| Property after Cure | | | | | | |
| Durometer, Shore A | 59 | 54 | 56 | 50 | 51 | 46 |
| Tensile Strength, MPa | 5.78 | 6.91 | 6.24 | 6.38 | 6.22 | 6.2 |
| Elongation, percent | 277 | 318 | 287 | 313 | 329 | 334 |
| 200 % Modulus, MPa | 3.77 | 3.41 | 3.75 | 2.87 | 2.97 | 2.54 |
| Compression Set, % | | | | | | |
| 0.7 pph Lupersol 101 | 38.5 | 42.6 | 40.4 | 38.9 | 43.6 | 33.6 |
| 1.3 pph Cadox TS-50 | 59.2 | 52.9 | 64.8 | 51.2 | 73.1 | 47.4 |
| Property after Heat Age, 70 hr/225°C | | | | | | |
| Durometer, Shore A | 56 | 55 | 55 | 54 | 58 | 51 |
| Durometer Change | -3 | 1 | -1 | 4 | 7 | 5 |
| Tensile Strength, MPa | 4.34 | 4.59 | 5 | 4.9 | 4.45 | 5.04 |
| Tensile % Change | 24.9 | -33.6 | -19.8 | -23.1 | -28.5 | -18.7 |
| Elongation, percent | 255 | 258 | 255 | 228 | 252 | 272 |
| Elongation % change | -7.9 | -18.9 | -11.1 | -27.1 | -23.4 | -18.6 |

* comparative run

In run 7, 125 g of fumed silica of Example 1 was fluidized in a Waring Blender as described in the same example. Then 2 g of hexamethyldisilazane was injected and mixed 3 minutes. Immediately following this, 12.5 g of dimethyldimethoxysilane was added and mixed 3 additional minutes. Run 8 was a repeat of run 7 with the exception being that the dimethyldimethoxysilane contained sufficient dimethyldichlorosilane to give 1850 ppm chlorine attached to silicon.

The two treated fillers were evaluated in the same manner as described in Example 1. A comparison of the data is shown in Table V, cont. Again, we see an improvement in the compression set of the elastomer vulcanized with the hot air vulcanizing (HAV) peroxide.

## Table V, Cont.

| Run Number | 7 | 8 |
|---|---|---|
| Treating Agent: | $Me_2Si(OMe)_2$ | $Me_2Si(OMe)_2$ plus dimethyldichlorosilane |
| Treating Agent, g/100g Silica | 10 | 10 |
| $(Me_3Si)_2NH$, g/100 g Silica | 2 | 2 |
| **Property:** | | |
| Haake Final Torque, mg | 2372 | 2585 |
| Mill Softening Time, seconds | 31 | 41 |
| Williams Plasticity Number | | |
| Initial | 213 | 241 |
| After 1 week | 269 | 310 |
| After 1 month | 290 | 345 |
| Williams Plasticity, Recovery | | |
| Initial | 15 | 20 |
| After 1 week | 30 | 36 |
| After 1 month | 66 | 66 |
| **Property after Cure** | | |
| Durometer, Shore A | 42 | 43 |
| Tensile Strength, MPa | 8.78 | 8.94 |
| Elongation, percent | 447 | 466 |
| 200 % Modulus, MPa | 2.42 | --- |
| **Compression Set, %** | | |
| 0.7 pph Lupersol 101 | 30.2 | 28.9 |
| 1.3 pph Cadox TS-50 | 62.6 | 46.5 |
| **Property after Heat Age, 70 hr/225°C.** | | |
| Durometer, Shore A | 39 | 46 |
| Durometer Change | -3 | 3 |
| Tensile Strength, MPa | 4.66 | 5.71 |
| Tensile % Change | -46.9 | -36 |
| Elongation, percent | 266 | 306 |
| Elongation % change | -40.5 | -34 |

Example 6 (Reference)

This example illustrates the alkoxysilane treatment of fumed silica in the presence of 0.9 to 7 % moisture on the filler surface prior to treatment.

First, 125 g each of fumed silica of Example 1 was equilibrated for 12 days in an environmental chamber at 21.2, 39.7, 72 and 84 percent relative humidity. The moisture on the silica following the equilibration was determined to be 0.89, 1.85, 4.29 and 6.89 percent after 1 hour at 105 C. Then, 125 g of the first equilibrated silica was fluidized in a Waring blender as described in Example 1. Special care was taken to assure the change in the moisture on the silica was minimized during this time. The procedure used was to immediately fluidize the silica following its removal from the environmental chamber. Then, 3.2 g of hexamethyldisilazane was added and mixed for 3 minutes. This was followed by injecting 12.5 g of methyltrimethoxysilane and continuing mixing for 3 additional minutes. The mixer was then turned off. The same procedure was used for the other 3 equilibrated silicas.

Each treated silica was evaluated as a reinforcing filler as stated in Example 1. A comparison of the results in Table VI shows the influence of the moisture on the silica surface prior to treatment. This is seen in the lowest moisture on the silica surface corresponding with the shortest mill softening time for the base compounded with this silica. It also can be seen in the Haake final torque, plasticity and recovery of the base. These properties increase correspondingly with an increase in the moisture content on the filler surface prior to treatment. No significant difference in the cured elastomers could be seen except for the elastomer compounded with the silica which had 6.89 percent moisture on the surface. The properties of this elastomer were somewhat poorer as seen in a loss in the tensile strength.

Table VI

| Property | 21.2 | 39.7 | 72 | 84* | 0* |
|---|---|---|---|---|---|
| Environmental Chamber % Humidity | 21.2 | 39.7 | 72 | 84* | 0* |
| Moisture on silica prior to treatment, % | 0.89 | 1.85 | 4.29 | 6.89 | >0 |
| **Property:** | | | | | |
| Haake Final Torque, mg | 2927 | 3126 | 3200 | 3025 | 3011 |
| Mill Softening Time, seconds | 82 | 127 | 181 | 210 | 85 |
| Williams Plasticity Number | | | | | |
| Initial | 320 | 350 | 368 | 389 | 401 |
| After 1 week | 401 | 450 | 457 | 460 | 462 |
| After 1 month | 432 | 462 | 475 | 485 | 480 |
| Williams Plasticity, Recovery | | | | | |
| Initial | 18 | 15 | 20 | 23 | 15 |
| After 1 week | 53 | 64 | 94 | 84 | 45 |
| After 1 month | 79 | 107 | 193 | 168 | 58 |
| Property after Cure | | | | | |
| Durometer, Shore A | 51 | 51 | 50 | 50 | 53 |
| Tensile Strength, MPa | 7.46 | 7.64 | 6.61 | 5.56 | 7.72 |
| Elongation, percent | 335 | 349 | 327 | 292 | 352 |
| 200% Modulus, MPa | 3.44 | 3.3 | 3.08 | 3.13 | 3.44 |
| Property after Heat Age, 70 hr/225°C. | | | | | |
| Durometer, Shore A | 51 | 52 | 50 | 50 | 52 |
| Durometer Change | 0 | 1 | 0 | 0 | -1 |
| Tensile Strength, MPa | 5.24 | 5.09 | 5.12 | 4.49 | 4.1 |
| Tensile % Change | -30 | -34 | -23 | -19 | -46.8 |
| Elongation, percent | 264 | 267 | 281 | 268 | 232 |
| Elongation % change | -21 | -24 | -14 | -8 | -34 |

* comparative example

### Example 7 (Reference)

This example illustrates the catalytic influence hexamethyldisilazane has on the treatment of fumed silica with dimethyldimethoxysilane.

First, 125 g of fumed silica of Example 1 was fluidized in a Waring Blender. Then, the amount of hexamethyldisilazane stated in Table VII was injected and mixed for 3 minutes. Then, 12.5 g of dimethyldimethoxysilane was injected and mixing continued for 3 more minutes. At this time, the mixer was turned off.

The treated silicas were evaluated as reinforcing fillers as described in Example 1. A comparison of the results in Table VII shows an increase in hexamethyldisilazane corresponds with an increase in filler treatment. The basis for this statement is the same as stated in Example 2. It also shows that an amount as low as 0.1 g of hexamethyldisilazane per 100 g silica significantly changes the rheology of the corresponding base as seen in a comparison of the Haake torque and plasticity of this base and the comparative run where no hexamethyldisilazane was used.

Table VII

(comparative)

| Hexamethyldisilazane Level: g:100 g Silica | 0 | 0.1 | 0.25 | 0.5 | 1 | 2 |
|---|---|---|---|---|---|---|
| Property: | | | | | | |
| Haake Final Torque, mg | 3771 | 3011 | 2806 | 2781 | 2594 | 2372 |
| Mill Softening Time, seconds | 86 | 45 | 37 | 60 | 48 | 31 |
| Williams Plasticity Number | | | | | | |
| Initial | 513 | 323 | 330 | 287 | 249 | 213 |
| After 1 week | 536 | 381 | 366 | 348 | 318 | 269 |
| After 1 month | 559 | 396 | 376 | 368 | 333 | 290 |
| Williams Plasticity, Recovery | | | | | | |
| Initial | 41 | 13 | 18 | 15 | 13 | 15 |
| After 1 week | 64 | 38 | 36 | 36 | 41 | 30 |
| After 1 month | 124 | 64 | 58 | 64 | 66 | 66 |
| Property after Cure | | | | | | |
| Durometer, Shore A | 59 | 53 | 50 | 50 | 47 | 42 |
| Tensile Strength, MPa | 6.66 | 8.12 | 8.78 | 8.08 | 8.69 | 8.78 |
| Elongation, percent | 291 | 349 | 363 | 362 | 399 | 447 |
| 200 % Modulus, MPa | 3.98 | 3.47 | 3.51 | 3.23 | 2.92 | 2.42 |
| Property after Heat Age, 70 hr/225°C. | | | | | | |
| Durometer, Shore A | 51 | 48 | 46 | 45 | 45 | 39 |
| Durometer Change | -8 | -5 | -4 | -5 | -2 | -3 |
| Tensile Strength, MPa | 4.69 | 4.21 | 4.12 | 4.4 | 4.48 | 4.66 |
| Tensile % Change | -29.5 | -48.16 | -53.02 | -45.49 | -48.5 | -46.9 |
| Elongation, percent | 294 | 228 | 224 | 254 | 248 | 266 |
| Elongation % change | 1.03 | -34.67 | -38.29 | -29.83 | -37.84 | -40.49 |

Example 8

This example illustrates the treatment of a precipitated silica with methyltrimethoxysilane catalyzed with methyltrichlorosilane and hexamethyldisilazane.

First, 125 grams of precipitated reinforcing silica was fluidized in a Waring Blender as described in Example 1. The precipitated silica had a surface area of about $160m_2/g$ and a pH of 4.5. It was obtained under the designation of FK 160 from Degussa Corporation, Pigment Division, of Teterborough, N.J. Then 0.20 g of hexamethyldisilazane was injected and mixed 3 minutes. Immediately following this a mixture of 8 grams of methyltrimethoxysilane and 0.02 gram of methyltrichlorosilane was added and mixed for 3 minutes. The blender was then turned off.

The treated filler was evaluated as a reinforcing filler in the same manner as is described in Example 1. A comparative run was done in the same manner, but using a sample of the precipitated filler without any treatment. The results are shown in Table VIII. A comparison of the properties shows that the treated filler has a lower plasticity initially and after aging than the untreated filler.

Table VIII

|  | Untreated Filler | Treated Filler |
|---|---|---|
| Property: |  |  |
| Mill Softening Time, seconds | 18 | 12 |
| Williams Plasticity Number |  |  |
| Initial | 310 | 272 |
| After 1 week | 373 | 323 |
| After 1 month | 401 | 353 |
| Williams Plasticity, Recovery |  |  |
| Initial | 15 | 13 |
| After 1 week | 43 | 18 |
| After 1 month | 79 | 38 |
| Property after Cure |  |  |
| Durometer,Shore A | 52 | 48 |
| Tensile Strength, MPa | 4.76 | 3.73 |
| Elongation,percent | 270 | 254 |
| 200 % Modulus, MPa | 3.25 | 2.76 |
| Property after Heat Age, 70 hr/225°C. |  |  |
| Durometer, Shore A | 48 | 45 |
| Durometer Change | -4 | -3 |
| Tensile Strength, MPa | 4.14 | 2.90 |
| Tensile % Change | -13 | -22 |
| Elongation, percent | 267 | 217 |
| Elongation % change | -1 | -15 |

## Claims

1. A method of rapidly treating the surface of reinforcing silica filler consisting essentially of mixing, at a temperature of from about - 10 to 130°C.,

(A) 100 parts by weight of reinforcing silica filler, having a surface area of greater than 50 $m^2/g$ and having from 0.5 to 6 parts by weight of absorbed moisture,

(B) from 3 to 30 parts by weight of volatile treating agent of the formula $R_xSi(OR')_{4-x}$, wherein R is a substituted or unsubstituted alkyl, alkenyl, or aryl radical having from 1 to 6 carbon atoms, R' is an alkyl radical having from 1 to 3 carbon atoms, x is 1 or 2 and R and R' are chosen so that the vapor pressure of the alkoxysilane exceeds 506 Pa (0.005 atmosphere) at treatment temperature,

(C) from 0.001 to 5.0 parts by weight of volatile catalyst comprising an acid A and a base B, wherein acid A is a volatile acid or acid progenitor and base B is a silylamine or silazane, acid A and base B being chosen so that the vapor pressure of acid A and of base B exceeds 506 Pa (0.005 atmosphere) at treatment temperature, for a period of time sufficient to allow the desired amount of treating agent to be adsorbed onto the surface of the particulate filler.

2. The method of claim 1 in which the volatile catalyst is admixed with the reinforcing silica filler before the mixing of the volatile treating agent.

3. A method according to claim 1, in which said mixing is accomplished by adding the base B to the silica followed by adding a mixture of the acid A and the volatile treating agent to the mixture of silica and base B.

4. Silicone elastomer containing treated silica filler produced by the method of claim 1.

## Patentansprüche

1. Verfahren zur schnellen Behandlung der Oberfläche von verstärkendem Siliciumdioxidfüllstoff, das im wesentlichen darin besteht, daß man bei einer Temperatur von etwa -10 bis 130°C miteinander mischt
   (A) 100 Gewichtsteile verstärkenden Siliciumdioxidfüllstoff mit einer Oberfläche von mehr als 50 $m^2$/g und 0,5 bis 6 Teilen absorbierter Feuchtigkeit,
   (B) 3 bis 30 Gewichtsteile eines flüchtigen Behandlungsmittels der Formel $R_xSi(OR')_{4-x}$, in der R einen substituierten oder unsubstituierten Alkyl-, Alkenyl- oder Arylrest mit 1 bis 6 Kohlenstoffatomen bedeutet, R' einen Alkylrest mit 1 bis 3 Kohlenstoffatomen bezeichnet, x für 1 oder 2 steht und R sowie R' so gewählt sind, daß der Dampfdruck des Alkoxysilans bei der Behandlungstemperatur 506 Pa (0,005 Atmosphären) übersteigt,
   (C) 0,001 bis 5,0 Gewichtsteile eines flüchtigen Katalysators, der eine Säure A und eine Base B enthält, wobei die Säure A eine flüchtige Säure oder ein flüchtiger Vorläuferstoff einer Säure und die Base B ein Silylamin oder ein Silazan ist und wobei die Säure A und die Base B so gewählt sind, daß der Dampfdruck der Säure A und der Base B bei der Behandlungstemperatur 506 Pa (0,005 Atmosphären) übersteigt,
   innerhalb eines Zeitraumes, der ausreicht, um die Adsorption der gewünschten Menge des Behandlungsmittels auf der Oberfläche des feinteiligen Füllstoffs zu ermöglichen.

2. Verfahren nach Anspruch 1, wobei der flüchtige Katalysator dem verstärkenden Siliciumdioxidfüllstoff zugemischt wird, bevor dieser mit dem flüchtigen Behandlungsmittel gemischt wird.

3. Verfahren nach Anspruch 1, wobei das Mischen bewirkt wird, indem die Base B dem Siliciumdioxid zugefügt wird und danach ein Gemisch aus der Säure A und dem flüchtigen Behandlungsmittel dem Gemisch aus dem Siliciumdioxid und der Base B zugesetzt wird.

4. Siliconelastomere, enthaltend behandelten Siliciumdioxidfüllstoff, der nach dem Verfahren des Anspruchs 1 hergestellt wurde.

## Revendications

1. Un procédé pour traiter rapidement la surface d'une charge de silice de renforcement, consistant essentiellement à mélanger, à une température d'environ -10 à 130°C,
   (A) 100 parties en poids d'une charge de silice de renforcement, ayant une surface spécifique supérieure à 50 $m^2$/g et contenant 0,5 à 6 parties en poids d'humidité absorbée,
   (B) 3 à 30 parties en poids d'un agent de traitement volatil de la formule $R_xSi(OR')_{4-x}$, où R est un radical alkyle, alcényle ou aryle substitué ou non substitué ayant 1 à 6 atomes de carbone, R' est un radical alkyle ayant 1 à 3 atomes de carbone, x est 1 ou 2, et R et R' sont choisis pour que la pression de vapeur de l'alcoxysilane dépasse 506 Pa à la température de traitement,
   (C) 0,001 à 5,0 parties en poids d'un catalyseur volatil comprenant un acide A et une base B, où l'acide A est un acide ou précurseur d'acide volatil et la base B est une silylamine ou un silazane, l'acide A et la base a étant choisis pour que la pression de vapeur de l'acide A et de la base B dépasse 506 Pa à la température de traitement,
   pendant une période de temps suffisante pour permettre à la quantité désirée d'agent de traitement d'être adsorbée sur la surface de la charge particulaire.

**2.** Le procédé de la revendication 1, dans lequel le catalyseur volatil est mélangé avec la charge de silice de renforcement avant que l'agent de traitement volatil y soit mélangé.

**3.** Un procédé selon la revendication 1, dans lequel ladite opération de mélange est effectuée en ajoutant la base B à la silice, puis en ajoutant un mélange de l'acide A et de l'agent de traitement volatil au mélange de silice et de base B.

**4.** Élastomère de silicone contenant une charge de silice traitée produite par le procédé de la revendication 1.